# EUROPEAN PATENT APPLICATION

(11) **EP 4 674 251 A1**
(43) Date of publication of application: **07.01.2026**
(21) Application number: 25165461.2
(22) Date of filing: 21.03.2025
(51) Int. Cl.: A01D 46/28, A01D 46/253, A01D 46/26

(54) **MACHINE FOR THE AUTOMATED HARVESTING OF FRUIT, COLLECTOR PLATE AND CORRESPONDING COLLECTOR DEVICE**

(30) Priority: 03.07.2024 IT 202400015355
(71) Applicant: Lacruz S.r.l., 31046 Oderzo (TV) (IT)
(72) Inventor: Cruzzolin, Andrea, 31043 Fontanelle (TV) (IT)
(74) Representative: Petraz, Gilberto Luigi

(57) **Abstract**

Machine (10) for the automated harvesting of fruit comprising at least one collector device (11) provided with a plurality of collector plates (20) disposed in succession at least partly overlapping each other, hinged with a proximal end (21) thereof to a support element (12) and configured so as to rotate elastically between a collecting position in which they define a collection plane (P), and an advance position in which each collector plate (20) assumes a position that is rotated with respect to the collecting position, each collector plate (20) comprising at least one distal end (22), opposite the proximal end (21), provided with at least one increased edge (24) extending in relief and configured to define at least a first blocking surface (28) facing the outside of the collector plate (20) and a second blocking surface (31) facing the inside of the collector plate (20) and shaped to cooperate by mechanical frictional connection with the first blocking surface (28) of an adjacent collector plate (20), at least in the collecting position.

## Description

### FIELD OF THE INVENTION

The present invention concerns a machine for the automated harvesting of small fruit directly from a plant, such as for example grapes, olives, plums or suchlike. The present invention also concerns the collector plate used in such a machine, as well as the collector device in which the collector plates operate.

The machine according to the present invention can be self-propelled, and in any case provided with collector plates, relatively disposed with respect to each other so as to harvest fruits or berries, detached from the plants that the harvesting machine passes through.

### BACKGROUND OF THE INVENTION

Machines, or harvesters, are known, substantially defined by a set of devices disposed in synergy with each other so as to be able to carry out the automated harvesting of fruit directly from a plant, such as mechanical grape harvesters for example. This type of machines can be either of the self-propelled type or towed by a tractor, and are suitable for harvesting grapes directly from the vine, during the agricultural harvesting steps.

The operating principle of these machines is essentially based on the alternated shaking, or tapping, of the vine shoots, to determine a gravitational fall of the bunches and collect the grapes in corresponding containing hoppers, suitably destemmed and separated from any foliage and other impurities.

This same mechanical operating principle of shaking, or tapping, also applies to automated machines aimed at harvesting olives, plums, but also apples, pears, or other small fruit, which can be harvested by shaking the plant.

Therefore, although in the following description and claims we will refer specifically to a mechanical grape harvester, as will become clearer hereafter it is not excluded that the inventive idea according to the present invention can also find effective and equal application in other types of automated harvesting machines, which exploit the same operating principle.

Known mechanical grape harvesters comprise a shaking device, for example consisting of a system of oscillating arms which, by gently and alternately striking the vine, determines the detachment and fall by gravity of the bunches.

Known mechanical grape harvesters are provided with collector devices that, by means of transport members, for example conveyor belts, at least partly disposed underneath the shaking device, collect the fallen bunches and transport them from the collection zone to corresponding collection tanks, in which the grapes are separated from the leaves and other impurities, destemmed and stored before being transferred to the trailers of the tractors that will head to the cellar.

The collector devices further comprise, in correspondence with the collection zone, two rows of collector plates disposed between an inlet and an outlet of the machine, parallel to a central axis thereof, partly overlapping with each other along the respective rows defining a collection plane. The collector plates are elastically hinged on the vehicle and define at least one collecting position in which they are reciprocally overlapping with each other, both in order to contain the fall of the fallen bunches and also to form a transverse geometry that causes the fallen bunches to deposit, laterally, on the belts.

The elastic mounting of the collector plates allows them to rotate following the action of relative thrust of the vine's shoots or stems, in the advancing phases of the machine, to then return into the collecting position as soon as the stem has been passed.

It has been observed that a number of fruits unexpectedly passes through the collection plane formed by the plates of known collector devices, despite the plates being overlapping.

In particular, an opening of the collection plane can occur during a brief moment when one plate has just left the stem that was pushing it into a folded back position and while the next plate of the row is still being held by the stem.

The appearance of this empty space is amplified when the return force exerted on the plates is significant. Under the effect of a sudden release of the plate when it leaves the stem that was holding it into its folded back position, and under the effect of a significant return torque, the plate tends not only to return to its resting, or collecting, position, but also to temporarily go beyond this resting, or collecting, position.

The fact of going beyond the angular resting, or collecting, position temporarily accentuates a divergent displacement of the plate with respect to the plate that immediately follows in the direction of the outlet of the collector device and increases the size of the void left behind the stem.

The fruits that are on the plate during its rotation toward the resting, or collecting, position, radially accelerated as an effect of the rotation, are therefore pushed toward the opening, or void, that it is created in the overlapping of the plates behind the stem and out of the collector device itself, thus losing part of the harvested fruits.

One of the design considerations relating to the collector plates is therefore focused on maintaining a correct and effective reciprocal position between two successive plates, so as to guarantee at least the condition of collection of the bunches.

In this sense, a solution is known from US patent application US-A-5,341,630 in which each plate for the collection of the fallen product is disposed in a row with adjacent plates in overlapping relationship and comprises a sheet body on which there is created, by plastic deformation, a recess/stop that results in a concave depression, similar to a dimple, on the lower side of the sheet body, and a convex protrusion on the upper, opposite face of the sheet body.

The position in which the recess/stop is created with respect to the plated sheet is such that the convex protrusion defined on a first plate cooperates by same-shape coupling in the concave depression of the adjacent plate, maintaining the desired reciprocal distance between the two.

This solution has the disadvantage that the relative same-shape coupling between the concave depression and the convex protrusion almost exclusively exploits the elastic deformation capability of the plated sheet, both in order to maintain the coupling and also to guarantee that the plates will rotate following the thrust action caused by the machine's advance phases. It is clear that a similar solution, when the plates are also subjected to the load of the collected bunches, can lead to an uncontrolled bending of the plates themselves, which can cause the accidental disconnection between the concave depression and the convex protrusion, with consequent reciprocal detachment of the plates and the possibility of malfunctions in the harvest, and even partial loss of the load.

Another solution is known from Soviet patent application SU-A-656583, in which the harvesting machine comprises the plates installed with overlap, each of which is equipped with a blocking element made in the form of a roll with an elastomeric element protruding above the plate, with respect to the operating condition. In addition, an abutment in the form of a wooden strip is fixed on a lower and rear edge, always with respect to the operating condition.

In this way, when the machine moves along a row, the lower part of the plant advances relatively along the axis of the machine, progressively rotating the plates until the roll of a first plate contacts the abutment of the adjacent plate, defining the maximum reciprocal travel, during rotation, and indirectly exerting a combined action of reciprocal opening of the plates in succession.

This solution is, therefore, related only to a type of end-of-travel and, at most, reciprocal rotation between the plates, but it does not guarantee a reciprocal positioning between two adjacent plates is maintained in the collecting position, since, in this condition, neither the roll, nor other elements described, are described in cooperation, to define this operational positioning.

Therefore, also in this solution, when the plates are also subjected to the load of the collected bunches, an uncontrolled bending can occur, which can also cause a free rotation of the plates, with consequent detachment thereof and the possibility of malfunctions in the harvest, and even partial loss of the load.

Another solution is known from German application DD-A-281740, which discloses that the cooperation between the rows of trapezoidal and partly overlapping capture elements, or plates, defines what is referred to as a seal for fruit harvesters, in the capture phases of the material harvested in the trunk area of the plant. The peculiarity of this solution lies in the fact that each plate provides elongated holes, or slots, disposed in the machine's direction of travel and suitable to accommodate corresponding support bolts of a respective subsequent plate. The conformation of the slot therefore defines the travel capability of the corresponding bolt and, therefore, the maximum reciprocal travel, during rotation, to move from a collecting condition to a relatively rotated condition.

This solution is also, therefore, related only to a type of end-of-travel and, at most, reciprocal rotation between the plates, but it does not guarantee a reciprocal positioning between two adjacent plates is maintained during the collection, with the possibility of malfunctions in the harvest, and even partial loss of the load.

Finally, from European patent EP-B-3510855 and patent application US 2019/208706 A1, a solution is known in which each plate for a fruit harvester comprises, in addition to a proximal end, a distal end and opposite front and rear edges, a first stop provided on an upper face for collecting the fruit in proximity to the front edge, and a second stop disposed on a lower face, opposite the upper one, in proximity to the rear edge and with a shape complementing the first stop.

In this solution, the cooperation by contact between the first stop of a first plate and the second stop of a subsequent plate acts as an obstacle to limit the amplitude of the divergent displacement, respectively, between two successive plates of a row of plates, during a rotary movement of a plate between the folded position and the resting, or collecting, position.

This solution is related to a type of conditioning of the amplitude of the divergent displacement during the reciprocal rotation between two plates, but it does not guarantee a reciprocal positioning between two adjacent plates is maintained in the collecting position.

Therefore, also in this solution, when the plates are also subjected to the load of the collected bunches, a free rotation of the plates can occur, with consequent reciprocal detachment thereof and the possibility of malfunctions in the harvest, and even partial loss of the load.

Moreover, in this known solution an edge of the distal end of the plate which forms an angle with the front edge also comprises a raised edge in the part that is not susceptible to being overlapped by another plate in a series of plates. The raised edge of the distal end is also higher than the raised edge of the front edge. This raised edge constitutes a relief for containing the fruit. The raised edge of the distal end has a backward fold toward the median axis of the plate, at a right angle with respect to a slight depression of the upper face of the plate. This depression is susceptible to collecting juice or a pile of fruit collected in an area not swept by an overlap of the plates, and which would be susceptible to passing through a space between two plates during a rapid return of the plate toward its resting position. This raised edge that constitutes a relief for containing the fruit and the respective backward fold thereof, however, do not act as blocking or stop elements that limit the rotation of the plate, because in this known plate the function of limiting the rotation, in order to prevent the formation of voids, or openings, in the collection plane is carried out by the first stop provided on the upper fruit collection face in proximity to the front edge, and by the second stop disposed on the lower face, opposite the upper face, in proximity to the rear edge and with a shape complementing the first stop.

Document US 2013/269307 A1 discloses a plate for a collector table for machines for harvesting small fruits. The plate has an upper face and a lower face which are disposed between a fixing end, or proximal end, and a free end, or distal end, which is provided with a stopping edge for the fruit, which rises above the plane containing the upper surface and consists of a flexible lip having an elastic deformation capability. This stopping edge, moreover, has a height such as to prevent the fruits, by rolling or sliding on the upper surface of the plates, from going beyond the edge of the distal end of the plates. This known plate, however, is not provided with blocking or stop elements able to limit the rotation of the plate and therefore prevent the formation of voids, or openings, in the collection plane.

There is therefore the need to perfect both a machine for the automated harvesting of fruit and also the corresponding collector plate, which can overcome at least one of the disadvantages of the state of the art.

To do this, it is necessary to resolve the technical problem of achieving a correct and reciprocal relative elastic movement of the plates and, at the same time, avoiding malfunctions in the harvest or even a partial loss of the load.

In particular, one purpose of the present invention is to provide a machine in which the collector plates can both move in a controlled and coordinated manner, between the collecting position and the reciprocally rotated position, and also define a desired resistance to bending in the collecting position, in order to prevent free reciprocal rotations.

Another purpose is to characterize the plates in such a way as to guarantee their planarity even during the collection step by means of attachment means that are consequent to each other so as to limit, if not completely eliminate, possible torsions.

Another purpose of the present invention is to provide a harvesting machine that is simple and economical to produce.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to resolve the technical problem described above in a new and original way, also achieving considerable advantages compared to the state of the prior art, a harvesting machine and collector device as described here are applied for the automated harvesting of small fruit directly from a plant, such as for example grapes, olives, plums or suchlike.

In accordance with some embodiments, a collector device with plates is provided for a machine for the automated harvesting of fruit, comprising a plurality of collector plates disposed in succession, along at least one row of collector plates which is essentially parallel to an operating direction of advance, which collector plates are at least partly overlapping each other, hinged with a proximal end thereof to a support element and configured so as to rotate elastically between a collecting position in which they define a collection plane, and an advance position in which each collector plate assumes a position that is rotated with respect to the collecting position.

In accordance with some embodiments, each collector plate comprises at least one distal end, opposite the proximal end, provided with at least one increased edge extending in relief and configured to define at least a first blocking surface facing the outside of the collector plate and able to limit a rotation of the collector plate, and a second blocking surface facing the inside of the collector plate and shaped to cooperate by mechanical frictional connection with the first blocking surface of an adjacent collector plate in the row, in order to limit a rotation of the collector plate, at least in the collecting position.

In accordance with some embodiments, the above mentioned cooperation by mechanical frictional connection limits the reciprocal rotation between the more advanced collector plate and the more backward collector plate, without further stop elements able to limit the rotation of the collector plate, so that the more advanced collector plate does not go beyond its collecting position, preventing the formation of openings, or voids, in the collection plane.

In accordance with some embodiments, the first blocking surface of a collector plate that is more advanced along the row with respect to another more backward collector plate directly upstream of the more advanced collector plate, in said row, engages the second blocking surface of the more backward collector plate with contact by mechanical interference. This engagement with contact by mechanical interference between the first blocking surface of the more advanced collector plate and the second blocking surface of the more backward collector plate limits the reciprocal rotation between the more advanced collector plate and the more backward collector plate, so that the more advanced collector plate does not go beyond its collecting position when the more advanced collector plate returns from the rotated position to its collecting position, preventing the formation of openings, or voids, in the collection plane.

In accordance with some embodiments, the collector plate is without further stop elements able to limit the rotation of the collector plate.

In accordance with some embodiments, the first blocking surface comprises a curvilinear development having a first radius and the second blocking surface comprises a curvilinear development having a second radius which is increased, or substantially equivalent, with respect to the first radius.

In accordance with some embodiments, the first blocking surface comprises a rectilinear development defining a specific angle with respect to a longitudinal axis of the collector plate.

In accordance with some embodiments, the second blocking surface comprises a rectilinear development defining said specific angle with respect to the longitudinal axis of the collector plate.

In accordance with some embodiments, each collector plate comprises at least one limiting element extending from a first surface and a containing seating created on a second surface opposite the first surface and configured to accommodate and limit the relative movement of a limiting element created on an adjacent collector plate.

In accordance with some embodiments, the increased edge extends in relief with respect to the first surface.

In accordance with some embodiments, the increased edge is rigid.

In accordance with some embodiments, the collector device comprises two rows of collector plates, the two rows being placed side by side to each other, essentially parallel to the operating direction of advance.

In accordance with some embodiments, there is also provided a machine for the automated harvesting of fruit, which comprises at least one collector device as disclosed here.

In accordance with some embodiments, the collector plates, provided in the collector device, define one or more opposing rows which extend in the direction of advance of the machine relative to the plants. The collector plates are configured so as to rotate elastically between a collecting position in which they define a collection plane, and an advance position in which each collector plate assumes a position that is rotated with respect to the collecting position, for example so as to allow the passage of the plant stem, or poles for supporting the crops. The elastic rotation of the collector plates is such as to guarantee the return to the collecting position, once the plant stem, or crop supporting poles, has been relatively passed.

In accordance with some embodiments, each collector plate comprises at least one distal end, provided opposite the proximal end, provided with at least one increased edge which extends in relief, for example but not exclusively with respect to a first surface, or fruit collection surface, and is configured to define at least a first blocking surface facing the outside of the collector plate.

In some embodiments, the blocking surface defines at least one external portion of the distal end of the collector plate.

In accordance with some embodiments, the increased edge defines a second blocking surface, which faces the inside of the collector plate and is shaped to cooperate by mechanical frictional connection with the first blocking surface of an adjacent collector plate, at least in the collecting position.

In this way, when two adjacent collector plates are in the collecting position, a coupling by friction is defined between the two reciprocal increased edges, that is, the first blocking surface of one and the second blocking surface of the other exert a reciprocal radial contact force, which derives from the reciprocal contact forcing between the two, creating the tangential friction necessary to guarantee the stable positioning between the collector plates.

This mechanical coupling guarantees the stable reciprocal positioning between the adjacent collector plates in the collecting position, preventing single free rotations thereof and, therefore, preventing the formation of unwanted openings or voids in the collection plane defined by the plates, without the provision of further blocking or stop elements and limiting the possibility of harvesting malfunctions and losses of the harvested load to a minimum.

A further advantage of the solution according to the present invention is given by the fact that, since it works by friction, elastic hooks, swinging obstacles or other are not required to guarantee the stable positioning of two adjacent collector plates in the collecting position.

In addition, since a mechanical connection is defined between the increased edges of adjacent collector plates, a continuous structural curb is substantially defined in correspondence with the distal ends of the collector plates, to the advantage of increased resistance to bending and a greater guarantee that the collection plane will be kept stable, preventing reciprocal and uncontrolled movements of the single collector plates as a result of the weight of the load harvested.

Therefore, with the solution according to the present invention it is possible to allow a correct and reciprocal relative elastic movement of the collector plates and, at the same time, avoid malfunctions in the harvest or, even, partial loss of the load.

In accordance with some embodiments, the first blocking surface can comprise a curvilinear development with a first radius, while the second blocking surface can comprise a curvilinear development with a second radius which is increased, or substantially equivalent, with respect to the first radius. The first and second radius can be advantageously coordinated with the rotation of the single collector plates between the collecting position and the advance position, so as to define a circular insertion of one blocking surface into the other, until there is a complete reciprocal stop by friction.

In accordance with other embodiments, the first blocking surface can comprise a rectilinear development defining a specific angle with respect to a longitudinal axis of the collector plate, while the second blocking surface can comprise a rectilinear development defining the same specific angle with respect to the longitudinal axis, so as to define a conical coupling between the two.

In accordance with another aspect of the present invention, each collector plate comprises at least one limiting element which extends from the collection surface, and a containing seating created on a second surface, or lower surface, opposite the collection surface and configured to accommodate and limit the movement of a limiting element of an adjacent collector plate.

The reciprocal cooperation between the limiting element of one collector plate and the containing seating of the adjacent collector plate defines an interval of reciprocal rotation of the two collector plates between the collecting position and the advance position, allowing them to move in a controlled and coordinated manner so as to prevent reciprocal free rotations and prevent harvesting malfunctions.

In accordance with some embodiments, a collector plate is provided for a collector device of a machine for the automated harvesting of fruit, wherein the collector device comprises a plurality of collector plates disposed in succession, along at least one row of collector plates which is essentially parallel to an operating direction of advance of the machine. The above mentioned collector plate comprises at least one proximal end with which it is hinged to a support element. The plate comprises at least one distal end, opposite the proximal end, provided with at least one increased edge extending in relief and configured to define at least a first blocking surface facing the outside of the collector plate and able to limit a rotation of the collector plate, and a second blocking surface facing the inside of the collector plate and shaped to cooperate by mechanical frictional connection with the first blocking surface of an adjacent collector plate in the row, in order to limit a rotation of the collector plate, at least in the collecting position, without the provision of further stop elements able to limit the rotation of the collector plate.

In accordance with some embodiments, the above mentioned first blocking surface and second blocking surface are the only means or elements able to limit the reciprocal rotation between a more advanced collector plate and a more backward collector plate, so that the more advanced collector plate does not go beyond its collecting position, preventing the formation of openings, or voids, in the collection plane.

### DESCRIPTION OF THE DRAWINGS

These and other aspects, characteristics and advantages of the present invention will become apparent from the following description of an embodiment, given as a non-restrictive example with reference to the attached drawings wherein:
- fig. 1 is a partly sectioned three-dimensional view of a machine for the automated harvesting of fruit, according to the present invention;
- fig. 2 is a three-dimensional view from above of a collector plate of the machine of fig. 1;
- fig. 3 is a three-dimensional view from below of a collector plate of the machine of fig. 1;
- fig. 4 is a schematic plan view of a row of collector plates of the machine of fig. **1****,** in a first operating condition;
- fig. 5 is a schematic plan view of a row of collector plates of the machine of fig. **1****,** in a second operating condition;
- fig. 6 is a schematic plan view of a row of collector plates of the machine of fig. 1, in a third operating condition;
- fig. 6a is a schematic plan view of a row of collector plates of the machine of fig. 1, in a further operating condition;
- fig. 7 is a cross-section of a detail of fig. 6;
- fig. 8 is an enlarged detail of fig. 4; and
- fig. 9 is a variant of fig. 8.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

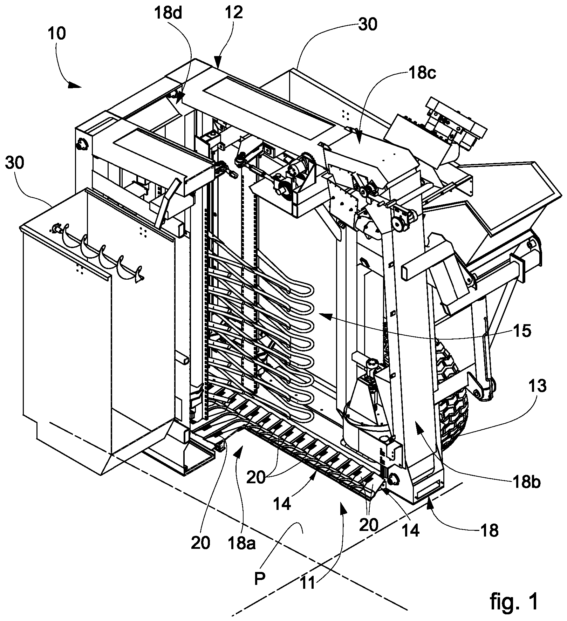

With reference to fig. 1, some embodiments of a machine for the automated harvesting of fruit, or harvester, are described, which hereafter in the description is also defined, by way of example, as a mechanical grape harvester 10.

The mechanical grape harvester 10 can be of the towed type, that is, selectively associable with a traction vehicle, or tractor, of a substantially known type and not shown, or of the self-propelled type, that is, provided with a control cabin, also of a substantially known type and not shown, in any case suitable to operatively move the mechanical grape harvester 10 into a suitable collecting position, that is, straddling the rows of vines from which to carry out the harvest.

In some embodiments, the mechanical grape harvester 10 comprises a vehicle, or a support element, 12 provided with a movement unit, in this specific case two driven wheels 13, to move the vehicle 12 on the field plane. In other embodiments, tracks, or other systems, can be provided in place of the driven wheels 13 to better adhere to the terrain in particular operating conditions.

At least one shaking device, or whips 15, and at least one collector device 11 with plates are substantially mounted on the vehicle 12. The whips 15 are provided opposing with respect to the zone where the vines will be during the operating phases of the mechanical grape harvester 10, and can be brought into controlled oscillation so as to strike opposite sides of the vine, to determine the detachment of the grape bunches and their fall by gravity.

The collector device 11 comprises a plurality of collector plates 20 disposed in succession, along at least one row 14 of collector plates 20 essentially parallel to an operating direction D of advance of the mechanical grape harvester 10, or harvesting machine in general.

The collector device 11 is operatively disposed below the whips 15 and comprises, for example, two opposing rows 14 of collector plates 20 and corresponding conveyor belts 18, disposed in cooperation with each other to collect and transport the detached bunches.

In the embodiment shown, the belts 18 have a circular development and travel, in sequence, through a collection zone 18a that is located below the whips 15, a transport zone 18b that develops vertically in the rear part of the vehicle 12 and an unloading zone 18c that develops above the whips 15, so as to direct the bunches collected toward corresponding collection hoppers 30. Finally, the belts 18 travel through a return zone 18d that develops in the front part of the vehicle 12.

The plates 20 are provided in correspondence with the collection zone 18a, in a median position relative to the belts 18, and can be inclined toward the latter so as to form a transverse geometry that causes the fallen bunches to deposit, laterally, on the belts 18.

The plates 20 are elastically hinged on the vehicle 12, as will be explained below, in a condition whereby they at least partly overlap with each other, and are configured so as to be able to rotate elastically between a collecting position in which they define a collection plane P, and an advance position in which each plate 20 assumes a condition that is rotated with respect to the collecting position.

As can be seen from the operating sequence of figs. from 4 to 6, the elastic mounting of the plates 20 allows the latter to bend following the action of relative thrust of the vine's stems F, in the advancing phases of the mechanical grape harvester 10, and then return in position as soon as the stem has been passed.

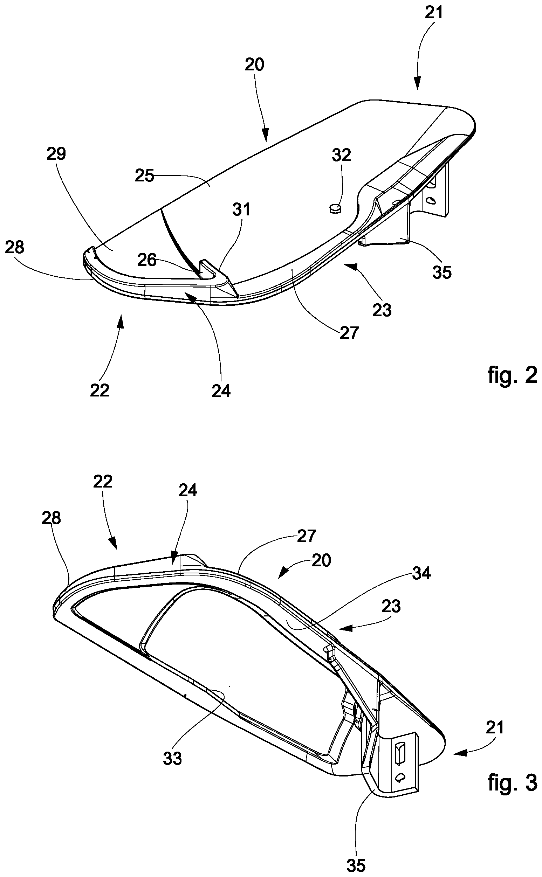

With reference to figs. 2 and 3, each plate 20 has a substantially flattened conformation and has a proximal end 21, in correspondence with which the elastically hinged assembly onto the vehicle 12 occurs, and a distal end 22, opposite the proximal end 21, by means of which each plate 20 cooperates with a mirroring plate 20 of the opposing row.

A front edge 23 of the plate 20 ideally connects the proximal end 21 to the distal end 22, and is configured to cooperate with the stem F to induce the elastic rotation of the plate 20 between the collecting position and the advance position.

The elastic hinging of each plate 20 to the vehicle 12 is realized by means of an elastic flange 35, which extends orthogonally to the plate 20, in correspondence with the proximal end 21, and is suitable to be fixed, for example by means of screws or suchlike, to the vehicle 12, and to be able to bend elastically so as to allow the sufficient rotation of the corresponding plate 20 between the collecting position, the advance position, and return elastically to the collecting position.

It is clear that this elastic hinging can also be realized with alternative and known systems, such as springs, elastomeric components, or guided systems in electronic form or other.

Each plate 20 further comprises an increased edge 24 created on the distal end 22, in relief with respect to a collection surface 25 of the plate.

In some embodiments, the increased edge 24 is rigid, in particular without elastic deformation capability.

In this specific case, the increased edge 24 extends along the entire perimeter portion of the distal end 22 and defines a continuous appendage 26 facing toward the inside of the plate 20. Advantageously, the appendage 26 and the remaining perimeter portion of the increased edge 24 define a collection area 29 for collecting the juices and grapes that accidentally fall during the phases of tapping the vines with the whips 15.

In the solution shown, the front edge 23 also has a curb 27 with an increased thickness that defines a continuity with the increased edge 24, so as to give a desired structural rigidity contrasting the bending of the plate 20.

In particular, the increased edge 24 defines a first blocking surface 28 facing the outside of the plate 20 and able to limit a rotation of the collector plate 20, and a second blocking surface 31 created on the appendage 26 and facing the inside of the plate 20.

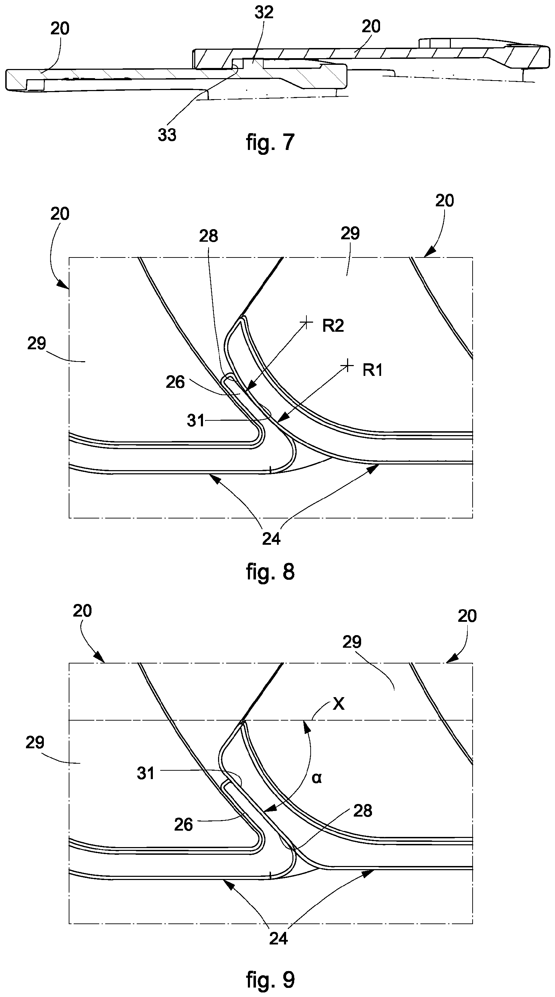

With reference to some embodiments described using figs. 8 and 9, the second blocking surface 31 is shaped to cooperate by mechanical frictional connection with the first blocking surface 28 of an adjacent plate 20 in the row 14, at least when the adjacent plates 20 are in the collecting position, so as to limit a rotation of the collector plate 20.

The above mentioned cooperation by mechanical friction connection limits the reciprocal rotation between the more advanced collector plate 20 and the more backward collector plate 20 along the row 14, without further stop elements able to limit the rotation of the collector plate 20, so that the more advanced collector plate 20 does not go beyond its collecting position, preventing the formation of openings, or voids, in the collection plane P.

In some embodiments, the first blocking surface 28 of a collector plate 20 more advanced along the row 14 than another more backward collector plate 20 directly upstream of the more advanced collector plate 20, in such row 14, engages the second blocking surface 31 of the more backward collector plate 20 with contact by mechanical interference. This engagement with contact by mechanical interference between the first blocking surface 28 of the more advanced collector plate 20 and the second blocking surface 31 of the more backward collector plate 20 limits the reciprocal rotation between the more advanced collector plate 20 and the more backward collector plate 20, so that the more advanced collector plate 20 does not go beyond its collecting position when the more advanced collector plate 20 returns from the rotated position to its collecting position, preventing the formation of openings, or voids, in the collection plane P.

This limitation of the rotation of the collector plate 20 to prevent the formation of openings, or voids, in the collection plane P is obtainable, according to the embodiments described here, without providing further stop elements able to limit the rotation of the collector plate 20. In other words, in the embodiments described here, the limitation of the rotation of the collector plate 20 is achieved exclusively by means of the engagement and mechanical interference of the first blocking surface 28 of the more advanced collector plate 20 and of the second blocking surface 31 of the more backward collector plate 20.

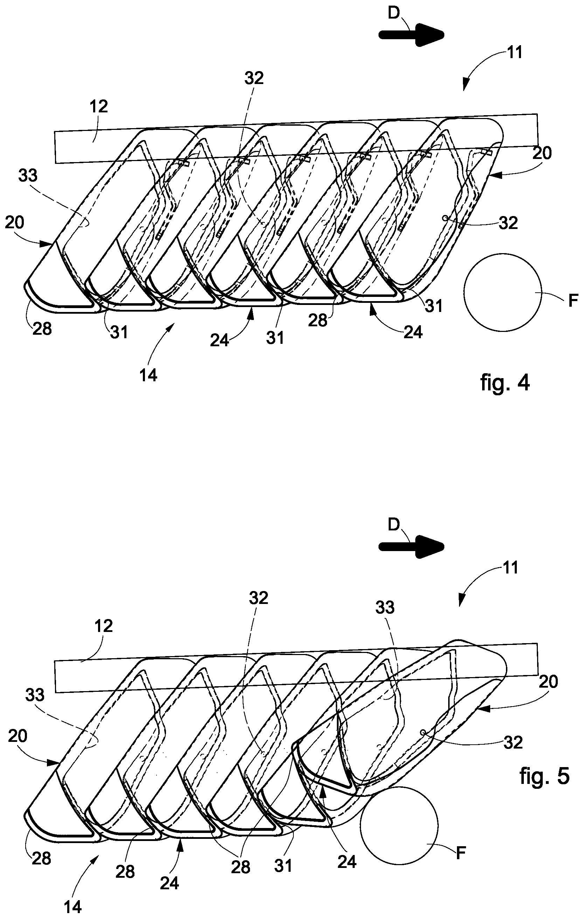

As can be seen in fig. 4, before the stem F engages the first plate 20 along the row 14, the collector plates 20 of one row 14 are all in the collecting position and, as can be seen in fig. 4, the first blocking surface 28 of a more advanced collector plate 20 engages and mechanically interferes with the second blocking surface 31 of a more backward collector plate 20, so that the collection plane P is without openings or voids.

Following the interaction with the stem F (fig. 5), the collector plates 20 are gradually rotated into an advance position that is rotated backward with respect to the collecting position.

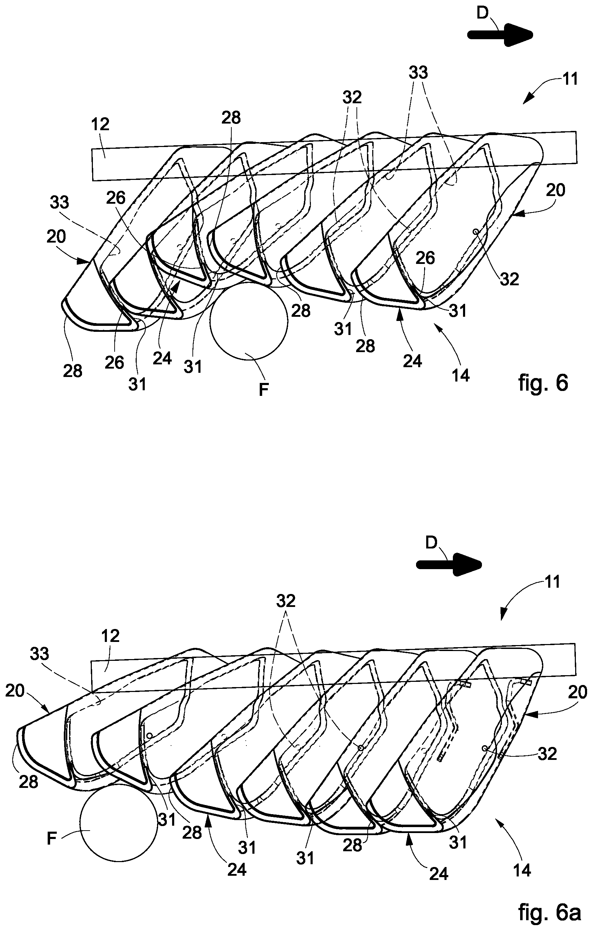

Once the stem F has gone beyond the first collector plates 20, the latter are recalled from the advance position to the respective collecting position (fig. 6) and, by rotating, each one tends to assume its own collecting position without, however, going beyond it due to excessive rotation because, in order to limit this excessive rotation, the engagement and mechanical interference between the first blocking surface 28 of a more advanced collector plate 20 and the second blocking surface 31 of a more backward collector plate 20 intervenes, limiting the rotation of the more advanced collector plate 20, preventing the formation of openings, or voids, in the collection plane P (fig. 6a), until the stem F has gone beyond all the collector plates 20 of the row 14 which, therefore, are restored to their collecting position, essentially again as in fig. 4.

In some embodiments, providing the first blocking surface 28 and the second blocking surface 31 as defined above can also have the advantage of better cushioning or absorbing contact between two collector plates 20, when a more advanced collector plate 20 returns to its collecting position.

In the embodiment shown in fig. 8, the first blocking surface 28 has a curvilinear development having a first radius R1 and the second blocking surface 31 has a curvilinear development with a second radius R2.

The dimensions represented in fig. 8 are intended to be exclusively representative of two hypothetical radii R1 and R2, and are not intended to indicate constructively, neither the specific value of the individual radii R1 and R2, nor the position of their geometric centers.

In some embodiments, the radii R1 and R2 can be discordant with each other, with for example the radius R2 increased with respect to the radius R1, or be substantially equivalent, and possibly concentric in the collecting position of the two adjacent plates 20. It is not excluded that radii R1 and R2 of equivalent, or discordant, value can also be non-concentric by differences of desired values, for example in order to emphasize the retention effect of the mechanical frictional connection defined between the two blocking surfaces 28 and 31.

In the variant shown in fig. 9, the first blocking surface 28 has a rectilinear development defining a specific angle α with respect to a longitudinal axis X of the corresponding plate 20. In the same way, the second blocking surface 31 comprises an equivalent rectilinear development, always oriented according to the angle α with respect to the longitudinal axis X of the plate 20. In this specific variant, a conical coupling between two successive plates 20 is substantially defined.

In both solutions shown, but also in other possible solutions with cooperation by mechanical frictional connection, there is defined a substantial structural solidity of the distal ends 22 of the adjacent plates 20, helping to increase the structural rigidity of the collection plane P, or at least of its zone that is distal relative to the hinging of the plates 20 which, because of mechanical characteristics, is normally the one most affected by the effects of the bending. This solution actively counteracts this tendency to bend, defining a structural cooperation between the adjacent plates 20.

The plate 20 according to the present invention further comprises a limiting element, or peg 32, which operatively extends upward from the collection surface 25, and a containing seating 33 created on a lower surface 34, opposite the collection surface 25. The containing seating 33 is shaped to accommodate and limit, as we shall see, the relative movement of the peg 32 of an adjacent plate 20, during the elastic and relative rotation of the plates 20.

The operation of the mechanical grape harvester 10 according to the present invention described heretofore takes place as follows.

Once arranged astride the row of vines, the mechanical grape harvester 10 is made to advance along the aforementioned operating direction D (figs. 4, 5 and 6), leaving aside the well-known tapping and transporting functionalities of the whips 15 and the belts 18, respectively, the collector device 11 in the portion of its rows of plates 20 progressively meets the stems F of the plants.

With regard to the operating direction D, the stems F cooperate with the curb 27 of the front edge 23, inducing a progressive elastic rotation of the first plate 20, as a result of the elastic deformation of the elastic flange 35, from the collecting position toward the advance position. And so forth, the second and third plates 20 are also moved into progressive elastic rotation toward the advance position.

Once they have gone beyond the stem F, the plates 20 tend to return to the collecting position, as a result of the elastic action exerted by the elastic flange 35. In this condition, there is a relative movement between the containing seating 33 of the plate 20 and the peg 32 of the adjacent plate 20. This relative movement is permitted until an edge of the containing seating 33 contacts the peg 32, constraining the rotation of the plate 20 to that of the adjacent plate 20. This progressive contact between the edges of the containing seatings 33 and the pegs 32 of the respectively adjacent plates 20 (fig. 6) allows to progressively guide the plates 20 into the collecting position, until the mechanical cooperation by friction between the corresponding blocking surfaces 28 and 31 (fig. 6a), preventing the formation of unwanted openings, or voids, in the collection plane P.

In this condition, the structural solidity of the collection plane P is restored, guaranteeing a high quality of the harvest, substantially without the risk of losses of fruit and juice coming from the action of the whips 15.

It is clear that modifications and/or additions of parts may be made to the mechanical grape harvester 10, to the plates 20 and to the collector device 11 as described heretofore.

It is also clear that, although the present invention has been described with reference to some specific examples, a person of skill in the art will be able to achieve other equivalent forms of machine for the automated harvesting of fruit, collector plate and corresponding collector device, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Collector device (11) with plates for a machine (10) for the automated harvesting of fruit, comprising a plurality of collector plates (20) disposed in succession, along at least one row (14) of collector plates (20) essentially parallel to an operating direction (D) of advance, and at least partly overlapping each other, hinged with a proximal end (21) thereof to a support element (12) and configured so as to rotate elastically between a collecting position in which they define a collection plane (P), and an advance position in which each collector plate (20) assumes a position that is rotated with respect to said collecting position, **characterized in that** each collector plate (20) comprises at least one distal end (22), opposite said proximal end (21), provided with at least one increased edge (24) extending in relief and configured to define at least a first blocking surface (28) facing the outside of said collector plate (20) and able to limit a rotation of said collector plate (20) and a second blocking surface (31) facing the inside of said collector plate (20) and shaped to cooperate by mechanical frictional connection with the first blocking surface (28) of an adjacent collector plate (20) in said row (14) in order to limit a rotation of said collector plate (20), at least in said collecting position,
wherein said cooperation by mechanical frictional connection limits the reciprocal rotation between said more advanced collector plate (20) and said more backward collector plate (20), without further stop elements able to limit the rotation of said collector plate (20), so that said more advanced collector plate (20) does not go beyond its collecting position, preventing the formation of openings, or voids, in said collection plane (P).

2. Collector device (11) with plates as in claim 1, **characterized in that** said first blocking surface (28) comprises a curvilinear development having a first radius (R1) and said second blocking surface (31) comprises a curvilinear development having a second radius (R2) which is increased, or equivalent, with respect to said first radius (R1).

3. Collector device (11) with plates as in claim 1, **characterized in that** said first blocking surface (28) comprises a rectilinear development defining a specific angle (α) with respect to a longitudinal axis (X) of said collector plate (20).

4. Collector device (11) with plates as in claim 1 or 3, **characterized in that** said second blocking surface (31) comprises a rectilinear development defining said specific angle (α) with respect to said longitudinal axis (X) of said collector plate (20).

5. Collector device (11) with plates as in one or the other of the previous claims, **characterized in that** each collector plate (20) comprises at least one limiting element (32) extending from a first surface (25) and a containing seating (33) created on a second surface (34) opposite said first surface (25) and configured to accommodate and limit the relative movement of a limiting element (32) created on an adjacent collector plate (20).

6. Collector device (11) with plates as in claim 5, **characterized in that** said increased edge (24) extends in relief with respect to said first surface (25).

7. Collector device (11) with plates as in one or other of the previous claims, **characterized in that** said increased edge (24) is rigid.

8. Collector device (11) with plates as in one or other of the previous claims, **characterized in that** it comprises two rows (14) of collector plates (20), said two rows (14) being placed side by side to each other, essentially parallel to said operating direction (D) of advance.

9. Collector plate (20) for a collector device (11) of a machine (10) for the automated harvesting of fruit, wherein the collector device (11) comprises a plurality of collector plates (20) disposed in succession, along at least one row (14) of collector plates (20) essentially parallel to an operating direction (D) of advance of said machine (10), wherein said collector plate (20) comprises at least one proximal end (21) with which it is hinged to a support element (12), **characterized in that** it comprises at least one distal end (22), opposite said proximal end (21), provided with at least one increased edge (24) extending in relief and configured to define at least a first blocking surface (28) facing the outside of said collector plate (20) and able to limit a rotation of said collector plate (20), and a second blocking surface (31) facing the inside of said collector plate (20) and shaped to cooperate by mechanical frictional connection with the first blocking surface (28) of an adjacent collector plate (20) in said row (14) in order to limit a rotation of said collector plate (20), at least in said collecting position, wherein said collector plate (20) is without further stop elements able to limit the rotation of said collector plate (20).

10. Collector plate (20) as in claim 9, **characterized in that** said increased edge (24) is rigid.

11. Machine (10) for the automated harvesting of fruit comprising at least one collector device (11) in accordance with any claim from 1 to 8.
